# EUROPEAN PATENT SPECIFICATION

(11) **EP 0 544 630 B1**
(45) Date of publication and mention of the grant of the patent: **07.06.1995**
(21) Application number: 92830623.2
(22) Date of filing: 17.11.1992
(51) Int. Cl.: H01R 3/00, H01R 13/447, B60R 16/02, H01R 13/502, B60D 1/62, H01R 13/635

(54) **An electrical connector, particularly for the connection of a towing vehicle and a towed vehicle with an antilock braking system**
Elektrischer Verbinder, insbesondere für die Verbindung eines ziehenden Fahrzeuges und gezogenes Fahrzeug mit Anti-Blockierregelsystem
Connecteur électrique, en particulier pour connecter un véhicule tracteur et un véhicule tracté avec système d'antiblockage

(30) Priority: 28.11.1991 IT TO910295
(43) Date of publication of application: 02.06.1993
(73) Proprietor: MENBER'S S.p.A., I-37045 Legnago (Verona) (IT)
(72) Inventor: Pasotto, Giorgio, I-37045 Legnago (Verona) (IT)
(74) Representative: Gerbino, Angelo

(56) References cited:
- EP-A- 0 372 188
- EP-A- 0 444 478
- DE-U- 8 101 510
- DE-U- 9 201 848
- US-A- 4 193 655

## Description

The present invention relates to electrical connectors used for the connection of a towing vehicle and a towed vehicle with an antilock braking system.

More specifically, the invention relates to an electrical connector of the type which comprises a socket and a plug which respectively have hollow generally cylindrical bodies and can be coupled to one another axially, in which the body of the socket has a sprung front cover, a pair of opposite outer lateral stops, a rear closing component, and an inner contact unit which has a plurality of axially locked male contact components, and the body of the plug has an outer plate for supporting the sprung cover of the socket, a pivoting locking unit which cooperates with the lateral stops of the socket for the axial coupling between the plug and socket, a rear closing component and an inner contact unit which has a plurality of axially locked female contact components which engage the male contact components of the socket.

Electrical connectors of this type are known from German utility model 81 01 510, as well as from standard ISO 7638-1985 (E).

In these known connectors, the contact units of the socket and plug are formed integrally with their respective bodies, generally by the moulding of plastics material. The contact units have axial holes for the fitting of the respective contact components, which takes place when the socket and the plug of the connector are assembled, as a result of these contact components being axially inserted in the body and through the holes of the contact units, before the rear closing components of the respective bodies are applied. The contact components are shaped such that the engaging and locking through the holes of the contact units is irreversible. The ejection unit is mounted directly in the body of the socket.

An arrangement of this type involves various disadvantages: firstly production of the socket body and the plug body integrally with the respective contact units involves the use of particularly complex and thus costly moulds. Secondly the operations of fitting the male contact components and the rod of the ejection unit inside the socket body, and of fitting the female contact components in the plug body require particularly complex tooling, owing to the need for automation in order to ensure that the requisite high rates of industrial production are obtained. Thirdly, the irreversible mounting of the contact components in the respective contact units gives rise to serious problems if it becomes necessary to remove or replace the latter, if a fault occurs. In this case special tools or even destructive systems must be used in order to separate the contact components from the respective contact units, using methods which are in any case complicated and cumbersome, and which involve the risk of damaging the contact units.

In electrical connectors of a different type it is already known, for example from EP-A- 0 444 478, to provide a contact unit which is separate and distinct from the body of the socket and of the plug. The contact unit known from EP-A- 0 444 478 is still affected by disadvantages in that it is difficult to obtain a precise radial positioning of the contact components, expecially in the case of the contact unit of the plug wherein the contact components project from the contact unit for a substantial part of their length.

The object of the present invention is to eliminate the aforementioned problems. According to the invention, this object is achieved by an electrical connector according to Claim 1.

According to an advantageous feature of the invention, the first part and the second part of each contact unit are joined to one another by means of front snap-on coupling means.

Further features and advantages of the invention will become apparent from the following detailed description with reference to the appended drawings provided purely by way of non-limiting example, in which:
- Figure 1 is an exploded perspective view of an electrical connector according to the invention;
- Figure 2 is a lateral, longitudinal, partial cross-section elevation of the connector;
- Figure 3 is an exploded enlarged perspective view of the connector plug contact unit; and
- Figure 4 is an exploded enlarged perspective view of the connector socket contact unit.

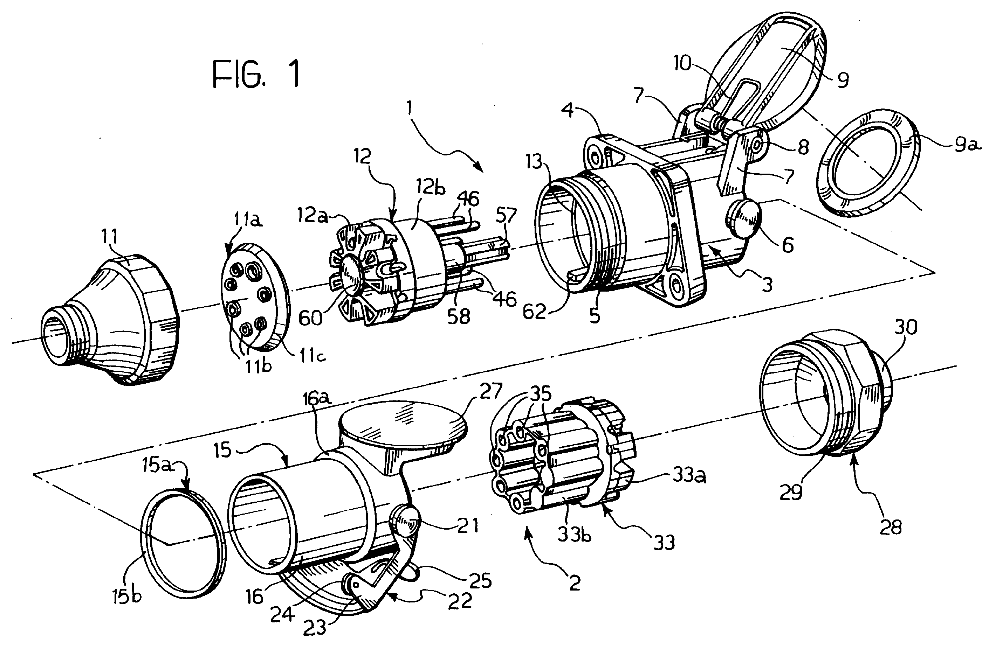

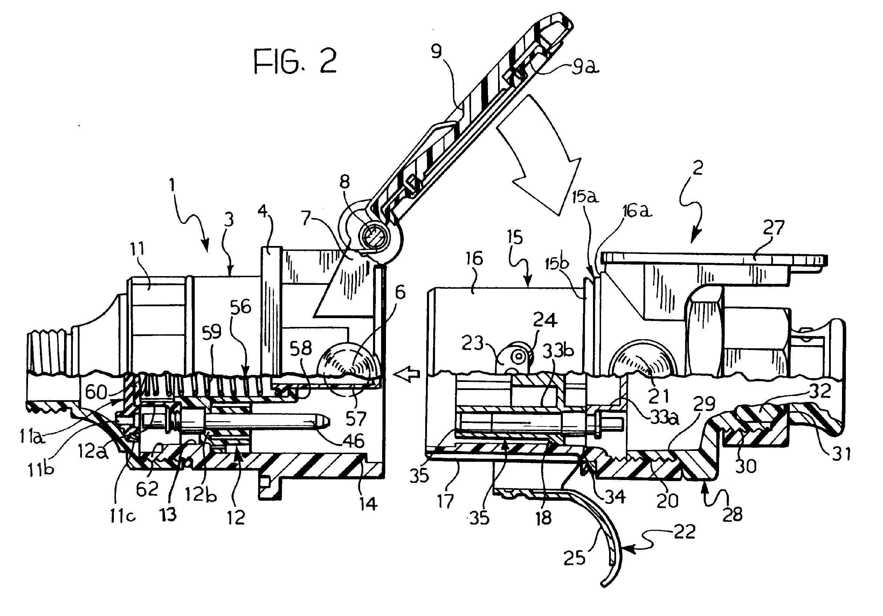

With reference initially to Figures 1 and 2, 1 and 2 as a whole indicate respectively the socket and plug of an electrical connector according to the invention. The socket 1 is intended to be fitted to the rear part of a towing vehicle, and the plug 2 is intended to be associated with the front part of a towed vehicle. The said connector is designed in particular for use on vehicles (towing and towed) which are provided with an antilock braking system (ABS).

The socket 1 comprises a generally cylindrical body 3 made of moulded plastics material, of which the central part has an attachment flange 4 and on the rear part of which there is a shank 5 threaded externally, on the inside of which there is an axial centring projection 62. The front part of the body 3 has a pair of diametrically opposed substantially mushroom-shaped outer lateral projections 6, above which there extend two support arms 7 which support an articulation pin 8 for a pivoting cover 9 with which there is associated a thrust spring 10. The spring 10 tends in a known manner to press the cover 9 into a lowered closing position, in which it seals the front end of the body 3.

On its inner wall the cover 9 has an annular elastomer gasket 9a, of which the resilience and shape ensure that the cover 9 is leaktight in its closing position against the front end of the body 3.

A hollow closing component 11, also made of plastics material, is screwed onto the threaded rear shank 5. 12 designates as a whole a contact unit consisting of a component which is separate and distinct from the body 3, and is inserted in an extractable manner inside the latter. In the assembled state, the contact unit 12 is locked angularly relative to the body 3, by means of the inner centring projection 62 which clearly defines the position of insertion, and is locked axially on one side by the closing component 11, and on the other side by a front inner stop flange 13 formed inside the body 3.

11a designates an end gasket consisting of an elastomer disc which is supported against the contact unit 12 and which has a series of holes 11b in order to enable electrical leads to pass through to the contact unit 12, and a peripheral lip 11c for lateral sealing against the inner wall of the cover 11.

On the front part of the body 3 there is also an inner axial centring rib 14 for insertion of the plug 2.

The plug 2 comprises a likewise generally cylindrical body 15 made of moulded plastics material, and has a front part 16 which can be inserted inside the front part 3 of the body of the socket 1. This front part 16 has an outer axial groove 17 which cooperates with the inner centring rib 14 of the body 3, and an outer annular flange 16a, against which there abuts an annular elastomer gasket 15a having a front sealing lip 15b, which, when the plug 2 is inserted in the socket 1, cooperates with the front end of the body 3 of the socket 1.

To the rear of the part 16, the body 15 has an inner annular shoulder 18, and to the rear of the latter, it has an enlarged internally threaded shank 20.

On the outside of this shank 20 there project two diametrically opposed lateral pins 21, about which there is articulated a generally arcuate pivoting metal coupling unit 22 having a pair of arms 23 which support rollers 24 and which cooperate in a known manner with studs 6 on the body 3 of the plug 1. The coupling unit 22 has a lever extension 25 for manual coupling / release thereof.

Above the unit 22, the body 15 is integral with a circular plate 27, which, when the plug 2 is inserted in the socket 1, acts as a support base for the cover 9.

28 designates a rear cable sealing component having a first externally threaded shank 29, which screws into the inner thread 20 of the body 15, and a second externally threaded shank 30 on the side facing away from the body 15, and onto which a cable clamp unit 31 is screwed. An elastomer ring 32 inserted in the cable clamp unit 31 is resiliently deformed as a result of the latter being screwed onto the threaded shank 30.

33 designates as a whole a contact unit comprising a component which is separate and distinct from the body 15, and is inserted in an extractable manner inside the latter. In the assembled state, the contact unit 33 is locked angularly by means of an integral centring projection 34 formed in the body 15, and is locked axially firstly by the annular projection 18 and secondly by the rear closing component 28.

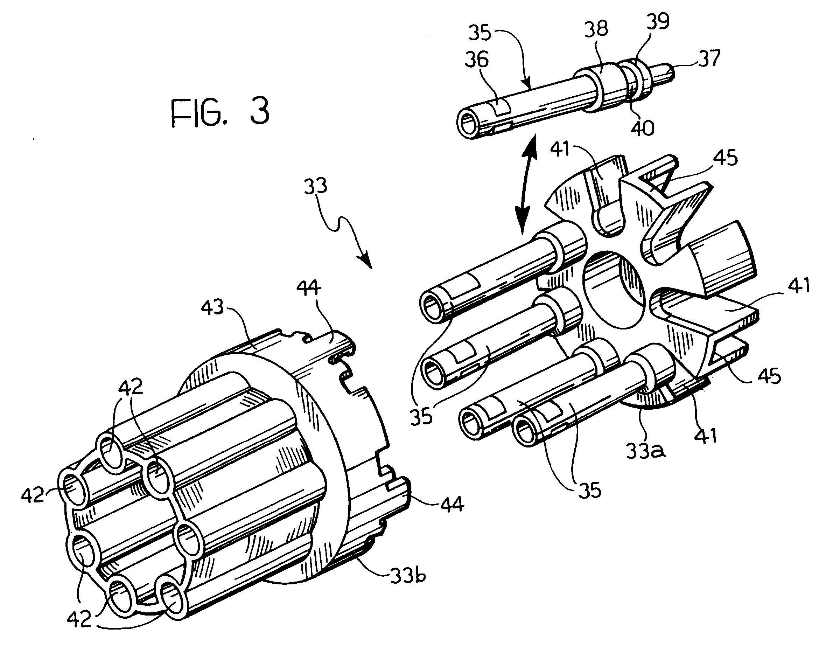

With reference to Figure 3 in greater detail, the contact unit 33 of the plug 2 comprises a first part 33a and a second part 33b which are separable from one another, and a series of female contact components 35, five of which are shown in the example provided. Each female contact 35 consists of an elongate tubular front part 36 and a short tubular rear part 37 (used for connection to an electrical cable not shown), which are separated from one another by a broad annular projection 38 and a short annular collar 39 delimiting an outer peripheral groove 40.

Part 33a contains a series of radial recesses 41 which accommodate the corresponding contact components 35 inserted radially therein. The arrangement is such that when insertion takes place, the peripheral grooves 40 of the contact components 35 snap into the base of the recesses 41, and the contact components 35 are thus axially locked relative to the part 33a, owing to the effect of the front resistance between the annular projections 38 on the one hand and the annular collars 39 on the other hand, against the edges of the recesses 41.

Part 33b has a plurality of tubular passages 42 for insertion of the contact components 35, and a coupling collar 43 formed with a series (three in the example shown) of axial toothed anchorage projections 44 which cooperate with corresponding coupling stops 45 formed in part 33a. Parts 33a and 33b are snapped together axially and reversibly by means of the toothed projections 44 and the anchorage components 45, and in the coupled state the contact components 35 supported by part 33a extend through the tubular passages 42 of part 33b, and are thus locked radially relative to the contact unit 33.

The contact unit 33 can easily be assembled before it is inserted, and locked inside the body 15 of the plug 2. Similarly, the contact unit 33 can easily be dismantled, for example in order to enable one or more of the contact components 35 to be replaced if they are faulty, by extracting the contact unit 33 from the body 15, after the rear closing component 28 has been removed.

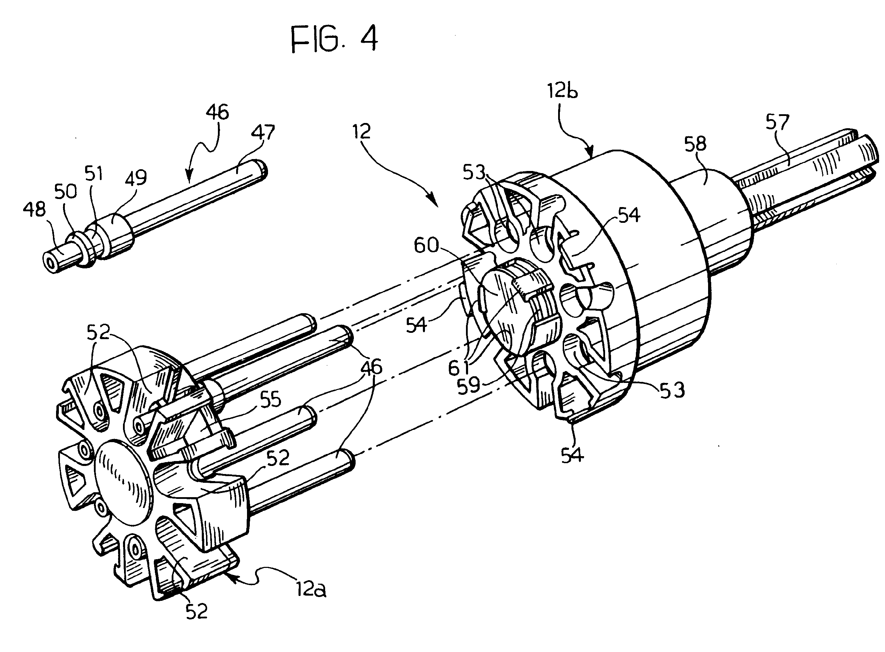

With reference to Figure 4, the contact unit 12 of the socket 1 also comprises two parts 12a, 12b which are connected to one another separably, and have a plurality (five in the example shown) of male contact components 46 complementary to the female contacts 35. Each male contact 46 has an elongate pin front part 47 and a tubular rear part 48 (used for connection to an electrical cable not shown) between which there are interposed a broad annular projection 49 and an annular collar 50 which delimit a groove 51.

In practice part 12a of the contact unit 12 is identical to part 33a of the contact unit 33: it consists of a body made of moulded plastics which has a series of radial recesses 52 in which contact components 46 engage by means of radial insertion. The arrangement is such that when insertion takes place, the peripheral groove 51 of each contact component 46 snaps into the base of the respective recess 52, and the contact component 46 is thus retained axially relative to the part 12a, owing to the effect of the front resistance between the projection 49 on the one hand and the collar 50 on the other hand, against the opposite edges of the base of the respective recess 52.

The part 12b is similar to part 33b: it comprises a body made of moulded plastics which has a series of tubular passages 53 for the engagement of the contact components 46, and a series (three in the example shown) of axial toothed anchorage projections 54 which snap reversibly into corresponding coupling stops 55 in the part 12a, owing to the effect of axial approach of the parts 12a and 12b. In the coupled state the tubular passages 53 lock the contact components 46 radially relative to the contact unit 12.

By means of this arrangement the contact components 46 can also be assembled and dismantled conveniently and easily, with the contact unit 12 extracted from the body 3 of the socket 1, without requiring special tools.

Part 12b of the contact unit 12 also includes an ejection unit, designated 56 - 57 as a whole, of which the function is to facilitate release of the plug 2 from the socket 1 when the lover 9 is released from the support plate 27 and the insertion unit 22 of the plug 2 is released from the lateral projections 6 of the socket 1.

This ejection unit 56 consists of a rod 57 mounted in a sliding manner in a central tubular guide extension 58 formed integrally with part 12b of the contact unit 12, and in which there is accommodated a helical compression spring 59 which reacts on the one hand against the inner end of the rod 57, and on the other hand against a support disc 60 inserted between a series of axial extensions with retention teeth 61, also formed integrally with part 12b, on the side opposite the tubular guide extension 58.

By means of this arrangement, the ejection unit 56 can also be easily and conveniently fitted outside the body 3 of the socket 1, when the contact unit 12 is assembled.

## Claims

1. An electrical connector, in particular for the connection of a towing vehicle and a towed vehicle with an antilock braking system, comprising a socket (1) and a plug (2) which respectively have hollow generally cylindrical bodies (3, 15) and can be coupled to one another axially, in which the body (3) of the socket (1) has a sprung front cover (9, 10), a pair of opposite outer lateral stops (6), a rear closing component (11), and an inner contact unit (12) which has a plurality of axially locked male contact components (46), and the body (15) of the plug (2) has an outer plate (27) for supporting the sprung cover (9, 10) of the socket (1), a pivoting locking unit (22) which cooperates with the lateral stops (6) of the body (3) of the socket (1) for axial coupling between the plug (2) and socket (1), a rear closing component (28, 31) and an inner contact unit (33) which has a plurality cf axially locked female contact components (35) which engage the male contact components (46) of the socket (1),
characterised in that the contact unit (12) of the socket (1) and the contact unit (33) of the plug (2) each comprise a component which is separate and distinct from the body (3, 15) respectively of the socket (1) and of the plug (2), and is locked relative to this body by the respective rear closing component (11, 28), the contact unit (12) of the socket (1) and the contact unit (33) of the plug (2) each comprising a first and a second part (12a, 12b; 33a, 33b) coupled axially to one another, of which the first part (12a, 33a) has a series of seats (52, 41) which receive the respective contact components (46, 35) and retain them axially, and of which the second part (12b, 33b) has a plurality of tubular passages (42, 53) which receive respective contact components (35, 46) and retain them radially.

2. A connector according to Claim 1, characterised in that each of the contact components (35, 46) has a peripheral groove (40, 51) for engagement in the corresponding radial seat (41, 52) of the first part (33a, 12a) of the respective contact unit (33, 12).

3. A connector according to either of Claims 1 or 2, characterised in that the first and second parts (12a, 12b, 33a; 33b) of each contact unit (12, 33) are coupled to one another by means of front snap-on means (54, 55; 44, 45).

4. A connector according to Claim 1, characterised in that the contact unit (12) of the socket (1) has an ejection unit (56) including a rod (57) which slides centrally relative to the contact unit (12), and is subjected to the action of a thrust spring.

5. A connector according to Claim 4, characterised in that the rod (57) of the ejection unit (56) is mounted in a sliding manner in a tubular guide extension (58) formed integrally with the second part (12b) of the contact unit (12) of the socket (1), and the respective thrust spring (59) is inserted in the tubular extension (58) between the rod (57) and a support disc (60) inserted between axial extensions with retention teeth (61) also formed integrally with the second part (12b) of the contact unit (12) of the socket (1).

6. A connector according to Claim 1, characterised in that a base gasket (11a) with a peripheral lateral sealing lip (11c) is inserted between the contact unit (12) of the socket (1) and the respective rear closing component (11).

## Patentansprüche

1. Elektrischer Verbinder, insbesondere für die Verbindung eines ziehenden Fahrzeuges mit einem gezogenen Fahrzeug mit einem Antiblockiersystem, welches eine Steckdose (1) und einen Stecker (2) enthält, die jeweils hohle im wesentlichen zylindrische Körper (3,15) aufweisen und axial aneinander ankuppelbar sind, wobei der Körper (3) der Steckdose (1) eine federbeaufschlagte vordere Abdeckung (9,10), ein Paar gegenüberliegende äußere seitliche Anschläge (6), ein hinteres Verschlußteil (11) und eine innere Kontakteinheit (12) mit einer Mehrzahl von axial festgelegten stiftartigen Kontaktteilen (46) aufweist und der Körper (15) des Steckers (2) eine äußere Platte (27) zum Halten der federbeaufschlagten Abdeckung (9,10) der Steckdose (1), eine schwenkbare Schließeinheit (22), welche mit den seitlichen Anschlägen (6) des Körpers (3) der Steckdose (1) zur axialen Ankupplung des Steckers (2) mit der Steckdose (1) zusammenwirkt, ein hinteres Verschlußteil (28, 31) und eine innere Kontakteinheit (33) mit einer Mehrzahl von axial festgelegten aufnehmenden Kontaktteilen (35), in die die stiftartigen Kontaktteile (46) der Steckdose (1) eingreifen, aufweist, dadurch gekennzeichnet, daß die Kontakteinheit (12) der Steckdose (1) und die Kontakteinheit (33) des Steckers (2) beide ein Bauteil umfassen, welches abgesondert und getrennt ist vom Körper (3,15) der Steckdose (1) bzw. des Steckers (2) und relativ zu diesem Körper durch das entsprechende hintere Verschlußteil (11,28) festgelegt ist, wobei die Kontakteinheit (12) der Steckdose (1) und die Kontakteinheit (33) des Steckers (2) jeweils ein erstes und ein zweites Teil (12a,12b;33a,33b) aufweisen, welche axial aneinandergekuppelt sind und von denen das erste Teil (12a,33a) eine Anzahl von Aufnahmen (52,41) aufweist, welche die jeweiligen Kontaktteile (46,35) aufnehmen und axial halten, und von denen das zweite Teil (12b,33b) eine Mehrzahl von rohrförmigen Durchtritten (42,53) aufweist, welche die entsprechenden Kontaktteile (35, 46) aufnehmen und radial halten.

2. Verbinder nach Anspruch 1, dadurch gekennzeichnet, daß jeder der Kontaktteile (35,46) an seinem Umfang eine Rille (40,51) zum Eingriff in die entsprechende radiale Aufnahme (41,52) des ersten Teiles (33a,12a) der jeweiligen Kontakteinheit (33,12) aufweist.

3. Verbinder nach Anspruch 1 oder 2, dadurch gekennzeichnet, daß die ersten und zweiten Teile (12a,12b;33a,33b) beider Kontakteinheiten (12,33) mit Hilfe von vorderseitigen Rastelementen (54,55; 44,45) miteinander verbunden sind.

4. Verbinder nach Anspruch 1, dadurch gekennzeichnet, daß die Kontakteinheit (12) der Steckdose (1) eine Auswurfeinheit (56) mit einem Stabelement (57) aufweist, welches zentral relativ zur Kontakteinheit (12) gleitet und von einer Druckfeder beaufschlagt ist.

5. Verbinder nach Anspruch 4, dadurch gekennzeichnet, daß das Stabelement (57) der Auswurfeinheit (56) in einem rohrförmigen Führungsfortsatz (58) gleitbar gelagert ist, welcher als integraler Bestandteil des zweiten Teiles (12b) der Kontakteinheit (12) der Steckdose (1) ausgebildet ist und die Druckfeder (59) in den rohrförmigen Fortsatz (58) zwischen dem Stabelement (57) und einer Stützscheibe (60) eingesetzt ist, wobei die Stützscheibe (60) zwischen ebenfalls integral mit dem zweiten Teil (12b) der Kontakteinheit (12) der Steckdose (1) ausgebildeten axialen Fortsätzen mit Haltezähnen (61) eingesetzt ist.

6. Verbinder nach Anspruch 1, dadurch gekennzeichnet, daß eine Basisdichtung (11a) mit einer am Umfang verlaufenden seitlichen Dichtungslippe (llc) zwischen der Kontakteinheit (12) des Steckers (1) und dem hinteren Verschlußteil (11) eingesetzt ist.

## Revendications

1. Connecteur électrique, en particulier destiné à la connexion d'un véhicule tractant et d'un véhicule tracté munis d'un système de freinage anti-bloquant, comportant une douille (1) et une fiche (2) qui ont respectivement des corps cylindriques de manière générale creux (3, 15) et peuvent être appariées l'une à l'autre axialement, dans lequel le corps (3) de la douille (1) a un couvercle avant (9, 10) muni d'un ressort, une paire de butées latérales extérieures opposées (6), un composant (11) fermant l'arrière et un ensemble (12) intérieur de contacts qui comporte plusieurs composants (46) formant contacts mâles bloqués axialement, et le corps (15) de la fiche (2) comporte une plaque extérieure (27) destinée à supporter le couvercle muni d'un ressort (9, 10) de la douille (1), un ensemble de verrouillage pivotant (22) qui coopère avec les butées latérales (6) du corps (3) de la douille (1) pour l'appariement axial entre la fiche (2) et la douille (1), un composant (28, 31) de fermeture arrière et un ensemble intérieur de contacts (33) qui comporte plusieurs composants (35) formant contacts femelles verrouillés axialement qui viennent en prise avec les composants (46) formant contacts mâles de la douille (1),
caractérisé en ce que l'ensemble de contacts (12) de la douille (1) et l'ensemble de contacts (33) de la fiche (2) constituent chacun un composant qui est séparé et distinct du corps (3, 15) respectif de la douille (1) et de la fiche (2), et est verrouillé par rapport à ce corps par le composant de fermeture arrière respectif (11, 28), l'ensemble de contacts (12) de la douille (1) et l'ensemble de contacts (33) de la fiche (2) comportant chacun une première et une seconde parties (12a, 12b; 33a, 33b) reliées axialement l'une à l'autre, dont la première partie (12a, 33a) comporte une série de sièges (52, 41) qui reçoivent les composants formant contacts respectifs (46, 35) et les retiennent axialement, et dont la seconde partie (12b, 33b) comporte plusieurs passages tubulaires (42, 53) qui reçoivent les composants formant contacts respectifs (35, 46) et les retiennent radialement.

2. Connecteur selon la revendication 1, caractérisé en ce que chacun des composants formant contacts (35, 46) comporte une gorge périphérique (40, 51) destinée à venir en prise dans le siège radial correspondant (41, 52) de la première partie (33a, 12a) de l'ensemble de contacts respectif (33, 12).

3. Connecteur selon la revendication 1 ou 2, caractérisé en ce que la première et la seconde parties (12a, 12b; 33a, 33b) de chaque ensemble de contacts (12, 33) sont reliées l'une à l'autre par l'intermédiaire de moyens d'encliquetage avant (54, 55; 44, 45).

4. Connecteur selon la revendication 1, caractérisé en ce que l'ensemble de contacts (12) de la douille (1) comporte un ensemble d'éjection (56) comportant une tige (57) qui coulisse au centre par rapport à l'ensemble de contacts (12), et est soumise à l'action d'un ressort de poussée.

5. Connecteur selon la revendication 4, caractérisé en ce que la tige (57) de l'ensemble d'éjection (56) est montée de manière coulissante dans un prolongement tubulaire de guidage (58) formé d'une pièce avec la seconde partie (12b) de l'ensemble de contacts (12) de la douille (1), et le ressort de poussée respectif (59) est inséré dans le prolongement tubulaire (58) entre la tige (57) et un disque de support (60) inséré entre des prolongements axiaux munis de dents de retenue (61) et formés aussi d'une pièce avec la seconde partie (12b) de l'ensemble de contacts (12) de la douille (1).

6. Connecteur selon la revendication 1, caractérisé en ce qu'un joint de base (11a) ayant une lèvre d'étanchéité latérale périphérique (11c) est inséré entre l'ensemble de contacts (12) de la douille (1) et le composant de fermeture arrière respectif (11).
